# EUROPÄISCHE PATENTSCHRIFT

(11) **EP 1 404 772 B1**
(45) Veröffentlichungstag und Bekanntmachung des Hinweises auf die Patenterteilung: **26.04.2006**
(21) Anmeldenummer: 02743225.1
(22) Anmeldetag: 19.06.2002
(51) Int. Cl.: C09J 11/08, C09J 175/04, C09J 201/10

(54) **KLEB-/DICHTSTOFFE MIT HOHEM ELEKTRISCHEN WIDERSTAND**
ADHESIVE/ WATERTIGHT MATERIAL WITH HIGH ELECTRICAL RESISTANCE
MATIERES ADHESIVES / ETANCHES A RESISTANCE ELECTRIQUE ELEVEE

(30) Priorität: 27.06.2001 DE 10130889
(43) Veröffentlichungstag der Anmeldung: 07.04.2004
(73) Patentinhaber: Henkel KGaA, 40589 Düsseldorf (DE)
(72) Erfinder: BECK, Horst, 67373 Dudenhofen (DE); SCHÄTZLE, Michael, 69190 Walldorf (DE); BRIDE, Gabriele, 69226 Nussloch (DE); GOLDBERGER, Wolfgang, 74921 Helmstadt-Bargen (DE)
(74) Vertreter: Scheffler, Ingolf
(86) Internationale Anmeldenummer: PCT/EP2002/006769
(87) Internationale Veröffentlichungsnummer: WO 2003/002683

(56) Entgegenhaltungen:
- EP-A- 0 244 608
- WO-A-99/24494
- US-A- 4 871 590

## Beschreibung

Die vorliegende Erfindung betrifft ein- oder zweikomponentige Kleb- / Dichtstoffe mit hohem elektrischem Widerstand sowie spezielle Additive zur Erhöhung des elektrischen Widerstandes der Kleb- / Dichtstoffe.

Elastomere Kleb- / Dichtstoffe spielen seit Jahren eine bedeutende Rolle in den zahlreichen technischen Anwendungen. Durch ihre hohe Elastizität verbunden mit ausgezeichneter Zug- und Reißfestigkeit, breites Haftspektrum mit und ohne Primer sowie ihr günstiges Preis- / Leistungsverhältnis eignen sie sich besonders für Anwendungen in der Automobilindustrie. Für die verschiedensten Abdichtungs- und Verklebungsprobleme, bei denen es auf hohe Zug- und Reißfestigkeit ankommt, werden beispielsweise einkomponentige feuchtigkeitshärtende Polyurethan- Kleb-/ Dichtstoffe eingesetzt. In ihrer einkomponentigen, feuchtigkeitshärtenden Ausführungsform enthalten diese Zusammensetzungen ein Bindemittel mit freien reaktiven Isocyanatgruppen. Bei Abwesenheit von Feuchtigkeit sind diese Systeme in pastöser, zum Teil sehr hochviskoser Form über lange Zeiträume lagerstabil, tritt nach Applikation und Fügen der zu verbindenden Bauteile Feuchtigkeit aus der umgebenden Luft hinzu, reagiert das Wasser in bekannter Weise mit den Isocyanatgruppen und führt letztendlich durch Vernetzung zu einem hochfesten, elastomeren Verbund zwischen den Werkstücken. In der zweikomponentigen Ausführungsform enthält die eine Komponente ein ähnliches Bindemittel mit reaktiven Isocyanatgruppen und die zweite Komponente enthält ein Bindemittel mit aktivem Wasserstoff, dies sind üblicherweise Polyole, Polyamine oder auch Wasser in einer pastösen Matrix, oder in Form von wasserabgebenden Substanzen wie wasserbeladenden Molekularsieben, kristallwasserhaltigen anorganischen oder organischen Verbindungen und dergleichen. Es sind auch ein- oder zweikomponentige lsocyanatgruppenfreie Bindemittelsysteme für Kleb- / Dichtstoffanwendungen vorgeschlagen worden, diese enthalten dann anstelle der reaktiven Isocyanatgruppen reaktive Silangruppen wie z. B. Alkoxysilane, Acetoxysilane, Silazane oder Oximatosilane.

Neben den vorgenannten Bindemitteln enthalten die ein- oder zweikomponentigen reaktiven Kleb- /Dichtstoffe - Zusammensetzungen noch Weichmacher, Füllstoffe, Katalysatoren, ggf. Pigmente, haftvermittelnde Substanzen, Stabilisatoren zur Erhöhung der Lagerstabilität sowie als Alterungsschutzmittel, Hilfsmittel zur Beeinflussung der Rheologie sowie weitere Hilfsmittel und Zusatzstoffe.

Ein wichtiges Anwendungsfeld für derartige Kleb- / Dichtstoffe in der Fahrzeugindustrie, insbesondere bei der Fertigung von Automobilen, ist die direkte Einglasung von Fahrzeugscheiben. Für diese Anwendungen werden pastöse, hochviskose Kleb- / Dichtstoffe eingesetzt, die in der Autoindustrie in der Regel durch Roboter auf den Karosserieflansch oder die Glasscheibe aufgetragen werden, wobei der Kleb- / Dichtstoff zur leichteren Applikation ggf. leicht erwärmt werden kann. Die technischen Anforderungen an die Klebstoffe zum Verkleben der Scheiben im Automobilbau sind ständig angestiegen. Im ursprünglichen Konzept der Automobilkonstruktion wurden solche Klebstoffe ausschließlich dazu verwendet, die Scheibe so in die Karosserie zu fügen, daß Feuchtigkeit und Staub nicht aus der Aussenwelt in den Innenraum der Karosserie eindringen kann, zudem sollte die Scheibe Crash-stabil in die Karosserie gefügt sein, d.h. im Falle eines Unfalles sollte die Scheibe fest mit der Karosserie verbunden bleiben und nicht herausfallen. Zum einen dürfen Passanten nicht durch umherfliegende Scheiben gefährdet werden, zum anderen müssen sich die heute üblichen Airbags an der Scheibe abstützen können, um das Verletzungsrisiko der Fahrzeuginsassen möglichst gering zu halten.

Bei modernen Fahrzeugkonstruktionen wurde die Funktion dieser Verklebung dahingehend erweitert, daß die Torsionssteifigkeit der Karosserie sowie deren Überschlagfestigkeit unter Verwendung hochfester und hochmoduliger Klebstoffe soweit verbessert werden konnte, ohne daß dickere und damit schwere Bleche in die Konstruktion der Karosserie einbezogen werden mußten. Aus diesem Grunde müssen moderne Scheibenklebstoffe hochelastisch sein, trotzdem müssen sie den hohen Schubmodul und hohe Zug- und Reißfestigkeit aufweisen. Die Erzielung derartig hoher mechanischer Eigenschaften lässt sich nur durch Mitverwendung von verstärkenden Füllstoffen erzielen. Ein bekannter hochwertiger und preisgünstiger Füllstoff der diese verstärkenden Eigenschaften in hohem Maße gewährleistet, sind die diversen Ruße, ggf. in Kombination mit anderen anorganischen und organischen Füllstoffen. Neben der guten verstärkenden Wirkung in der Bindemittelmatrix weisen die meisten Ruße noch einige weitere günstige Eigenschaften auf, es läßt sich das Fließverhalten des pastösen, noch nicht ausgehärteten Kleb- / Dichtstoffes durch geeignete Ruße in positiver Weise beeinflussen, so daß der Kleb- / Dichtstoff ohne zu hohe Druckanwendung aus den Applikationsgeräten auf das Substrat formgebend extrudiert werden kann, nach der Extrusion jedoch standfest auf dem Substrat verbleibt und in nicht ausgehärtetem Zustand trotzdem noch plastisch verformbar ist. Weiterhin schützt der Ruß in der ausgehärteten Bindemittelmatrix die Polymeren vor oxidativem bzw. photooxidativem Abbau. Nachteilig bei der Verwendung höherer Mengen an Ruß ist jedoch die Verschlechterung der elektrischen Eigenschaften des Kleb- / Dichtstoffes dergestalt, daß der elektrische Widerstand des ausgehärteten Kleb- / Dichtstoffes durch den hohen Rußgehalt signifikant erniedrigt wird. Zwar stehen die elektrischen Eigenschaften des Kleb- / Dichtstoffes nicht im direkten Zusammenhang mit den oben genannten positiven mechanischen Eigenschaften der Klebeverbindung, zwei Aspekte in der Konstruktion neuerer Fahrzeugtypen verändem jedoch die Bedeutung der elektrischen Eigenschaften des Klebstoffes:

In die Front- und Heckscheiben von Fahrzeugen, insbesondere Personenkraftwagen, werden immer komplexere Antennenkonstruktionen integriert. Auf die fehlerfreie Funktion dieser Antenne haben die Gleichspannungseigenschaften und die Wechselspannungseigenschaften des Kleb- / Dichtstoffes jedoch entscheidende Auswirkungen. Es gilt dabei, eine störende Beeinflussung Empfangs- und Sendeeigenschaften der Antennen durch den Kleb- / Dichtstoff in einem weitem Frequenzbereich (bis in den Gigahertzbereich) zu vermeiden oder doch zumindest stark zu unterdrücken.

Zunehmend werden Leichtbauwerkstoffe, insbesondere Aluminium, im Karosseriebau verwendet. In der elektrochemischen Spannungsreihe ist der Ruß (elementarer Kohlenstoff) stark positiv, d.h. edel, eingeordnet. Moderne Leichtbauwerkstoffe auf der Basis von Aluminium und Magnesium und deren Legierungen sind jedoch im negativen Bereich der elektrochemischen Spannungsreihe zu finden, d.h. sie sind gegenüber dem Kohlenstoff unedel. Es ist bekannt, daß beim Zusammenkommen eines unedlen Elementes und eines edlen Elementes in Gegenwart eines den elektrischen Strom leitenden Elektrolyten (z.B. Regenwasser) das chemisch unedlere Material an der Kontaktstelle wesentlich stärker korrodieren wird als es ohne diesen Kontakt der Fall wäre. Man spricht hier bekannterweise von der Kontaktkorrosion. In diesem Falle würde das unedlere Substrat d.h. das Aluminium- oder magnesiumhaltige Bauteil sich als "Opferanode" verbrauchen und stark korrodiert werden. Eine praktische Bedeutung hat diese Kontaktkorrosion sowie deren Unterdrückung ein erster Linie für die Scheibenverklebung bei Aluminiumkarosserien.

Dieses Problem ist bisher nur in sehr unbefriedigendem Maße dergestalt gelöst, daß man dazu übergegangen ist, den Rußgehalt in den Kleb- / Dichtstoffformulierungen drastisch abzusenken und dafür andere Füllstoffe einzusetzen. In aller Regel wird dies jedoch mit etlichen Nachteilen erkauft, zum einen sinkt die elektrische Leitfähigkeit nicht in dem Maße (mehrere Größenordnungen), wie dies eigentlich für die geforderten elektrischen oder elektromagnetischen Eigenschaften im Hinblick auf Antennentauglichkeit erforderlich ist, zum anderen verschlechtern sich häufig mechanische Eigenschaften des ausgehärteten Kleb- 1 Dichtstoffes sowie die Fließeigenschaften des nicht ausgehärteten Materials (z.B. Neigung zum Fadenziehen oder schlechterer Standfestigkeit der pastösen Raupe). Außerdem wird häufig ein höherer Anteil des teureren Bindemittels erforderlich, um wenigstens die mechanischen Festigkeiten und das Haftungsverhalten einigermaßen zu erfüllen. Es ist auch versucht worden, den Klebstoffformulierungen Anteile an PVC-Polymeren in Pulverform als Füllstoff hinzuzufügen, um den Rußanteil senken zu können. Es wird jedoch berichtet, daß durch diese Maßnahme die Gleichstromeigenschaften, wie spezifischer Widerstand, meistens unverändert bleiben, bestenfalls tendenziell verbessert werden. Im höherfrequenten Bereich kommt es jedoch zu signifikanten und relevanten Eigenschaftsverschlechterungen, die auf den Dipolcharakter des PVC-Moleküls zurückgeführt werden, siehe hierzu D. Symietz, D. Jovanovic, "Elektrische Materialkennwerte von Direktverglasungsklebstoffen und ihre praktische Bedeutung", 15. Internationales Symposium Swiss Bonding 01, 15.-17.05.2001, Rapperswil, Schweiz.

Direktverglasungs- Kleb-/ Dichtstoffe, die für die Verklebung von Fahrzeugscheiben geeignet sind, sind in einer Vielzahl von Patentanmeldungen beschrieben worden, beispielhaft erwähnt seien EP-A-244608, EP-A-264675, EP-A-255572, EP-A-310704, EP-A-439040, EP-A-477060, EP-A-540950 oder EP-A-705290. Das oben geschilderte Problem der unbefriedigenden elektrischen Eigenschaften derartiger Kleb- 1 Dichtstoffe für die Direktverglasung im Automobilbau wird in keiner vorgenannten Schriften angesprochen, noch wird eine Lösung für dieses Problem bereitgestellt.

Angesichts dieses Standes der Technik haben sich die Erfinder die Aufgabe gestellt, Wege zur Erhöhung des elektrischen Widerstandes von Kleb- / Dichtstoffen aufzuzeigen, und Zusammensetzungen bereitzustellen, die es erlauben, Ruß als verstärkenden Füllstoff weiterhin in den für den mechanischen Eigenschaften erforderlichen Mengen einsetzen zu können.

Die Lösung dieser Aufgabe ist den Patentansprüchen zu entnehmen, sie besteht im Wesentlichen in der Bereitstellung von Additiven zur Erhöhung des elektrischen Widerstandes von ein- oder zweikomponentigen Kleb- / Dichtstoffen.

Ein weiterer Gegenstand der vorliegenden Erfindung ist ein Verfahren zur Herstellung von ein- oder zweikomponentigen Kleb- / Dichtstoffzusammensetzungen mit hohem elektrischem Widerstand, gekennzeichnet durch die folgenden wesentlichen Verfahrensschritte:
a) Dispergieren eines pulverförmigen thermoplastischen Polymers in einem Löser, vorzugsweise einem hochsiedenden Lösemittel oder Weichmacher
b) Lösen des Polymers, ggf. unter Rühren und Erwärmen auf Temperaturen bis 140 °C, bis zur Homogenität,
c) Abkühlen der Polymer-Lösung,
d) Dispergieren dieser Lösung in einer Kleb- / Dichtstoffmasse enthaltend mindestens ein reaktives Prepolymer, Ruß, ggf. weitere Füllstoffe, Weichmacher sowie ggf. Katalysator(en) und weitere Hilfs- und Zusatzstoffe.

Als pulverförmige thermoplastische Polymere zur Herstellung der Additivlösung eignen sich eine Vielzahl von thermoplastischen Polymeren, vorzugsweise in der Form feinteiliger Pulver. Wichtiges Auswahlkriterien für die thermoplastischen Polymeren sind
- Es dürfen keine gegenüber dem Bindemittel reaktiven Gruppen in signifikanter Menge in diesen Thermoplasten vorhanden sein, insbesondere dürfen bei Polyurethansystemen keine nennenswerten Mengen an Hydroxylgruppen oder Aminogruppen vorhanden sein, da dies zu mangelnder Lagerstabilität der Kleb- / Dichtstoffzusammensetzungen führen würde.
- Das Polymerpulver soll sich in dem hochsiedenden Löser möglichst gut lösen, ggf. unter Erwärmen auf Temperaturen bis 140 °C.

Konkrete Beispiele für geeignete Polymerpulver sind Polyvinylchlorid (PVC), PVC-Copolymere (vorzugsweise Vinylchlorid - Vinylacetatcopolymere), Ethylenvinylacetat (EVA), (Meth)acrylsäureester - hier eigenen sich praktisch alle kommerziell verfügbaren Polymeren und Copolymeren von C1-bis C16-Alkylestern der Acrylsäure oder Methacrylsäure -, ataktische oder isotakische Poly- α- olefine, Polycarbonate, Polyester, Styrol- homo- oder Copolymere sowie deren Mischungen. In zweikomponentigen Bindemittelsystemen können auch Phenolharze eingesetzt werden, dort werden sie vorzugsweise in der Härterkomponente d.h. der nicht isocyanathaltigen Komponente eingesetzt, um Lagerstabilitätsprobleme zu vermeiden.

Löser für die vorgenannten thermoplastischen Polymere im Sinne dieser Erfindung sind Flüssigkeiten mit einem ausreichenden Lösevermögen für die vorgenannten Polymere, so daß bei Polymer zu Löser Verhältnissen zu 2:1 bis 1:5 ausreichende Homogenität und Lösung erzielt wird, ggf. kann die Lösung bei Raumtemperatur gelartige Struktur haben. Besteht in der Rezeptur genügend Freiraum für größere Mengen an Löser/Weichmacher können auch geringe Konzentrationen des Polymers im Löser verwendet werden. Es muß dann lediglich eine größere Menge dieser Lösung eingesetzt werden. Bei hohen Konzentrationen des Polymers im Löser liegen die Lösungen z.T. als hochviskose Gele vor, weshalb aufgrund der leichteren Untermischbarkeit die Konzentration vorzugsweise so niedrig wie möglich gewählt wird. Die optimale Menge ergibt sich meist aus der in der Rezeptur zur Verfügung stehenden Menge an Löser/Weichmacher. Als hochsiedend im Sinne der Erfindung sollen solche Lösungsmittel gelten, die einen Siedepunkt von mindestens 180 °C bei 10 mbar aufweisen. Konkrete Beispiele für derartige hochsiedende Löser sind die auch als Weichmacher eingesetzten Dialkylphthalate, Dialkyladipate, Dialkylsebacate, Mono- oder Dibenzoesäureester von monofunktionellen Alkoholen oder Diolen, Alkylphosphate, Arylphosphate, Alkyarylphosphate, Alkylsulfonsäure - Phenylester sowie Mineralöle (z.B. Weißöl) oder deren Mischungen. Falls der Kleb-/Dichtstoff nicht frei von flüchtigen Bestandteilen sein muß, ist es auch möglich, gängige niedersiedende organische Lösungsmittel wie Ester oder Ketone als Löser zu verwenden. Zur Erhöhung der Lösegeschwindigkeit der in der Regel festen Polymeren kann das Pulverisieren bzw. Feinvermahlen der Polymeren beitragen. Solcherart vorbehandelt, lassen sich einige dieser Polymeren schon bei Raumtemperatur genügend gut in Lösung bringen, so daß je nach Lösungseigenschaften evtl. sogar während des Compoundierprozesses schon der gewünschte Effekt eintritt, wenn das thermoplastische Pulver nur genügend fein vermahlen wurde (z.B. durch kryoskopische Mahlverfahren).

Je nach Art und Menge der zugesetzten Additiv-Lösung lässt sich der elektrische Gleichstrom-Widerstand um etwa 2 bis zu 7 Zehnerpotenzen erhöhen. Außerdem verbessern sich die Hochfrequenzeigenschaften signifikant. Überraschenderweise gilt dies auch für den Einsatz von gelöstem gelartigem PVC- Polymer, was angesichts des oben geschilderten Vorurteils überraschend ist. Ohne an diese Theorie gebunden zu sein, wird vermutet, daß die gelösten Polymere der Kleb- / Dichtstoffzusammensetzung andere elektrische Eigenschaften verleihen als wenn dieselben Polymere in feinteiliger Pulverform dispergiert in der Bindemittelmatrix vorliegen.

Weitere Bestandteile der erfindungsgemäßen Kleb- / Dichtstoffzusammensetzungen sind an sich bekannte Bestandteile. Die einkomponentig feuchtigkeitshärtenden Zusammensetzungen enthalten mindestens ein reaktives Prepolymer, vorzugsweise ein Polyurethanprepolymer mit reaktiven Isocyanatgruppen, Weichmacher, einen oder mehrere Ruße, ausgewählt aus der Gruppe der Flammruße, Channelruße, Gasruße oder Furnaceruße oder deren Mischungen. Weiterhin können ggf. weitere Füllstoffe, Weichmacher bzw. Weichmachermischungen sowie Katalysatoren, Stabilisatoren und weitere Hilfs- und Zusatzstoffe mitverwendet werden. Die isocyanatfunktionellen Prepolymere können in an sich bekannter Weise durch Umsetzung von linearen oder verzweigten Polyolen aus der Gruppe der Polyether, Polyester, Polycarbonate, Polycaprolactone oder Polybutadiene mit Di- oder mehrfunktionellen Isocyanaten erhalten werden.

Als Polyole eignen sich die bei Raumtemperatur flüssigen, glasartig fest/amorphen oder kristallinen Polyhydroxyverbindungen mit zwei bzw. drei Hydroxylgruppen pro Molekül im Molekulargewichtsbereich von 400 bis 20000, vorzugsweise im Bereich von 1000 bis 6000. Beispiele sind di- und/oder trifunktionelle Polypropylenglycole, es können auch statistische und/oder Blockcopolymere des Ethylenoxids und Propylenoxids eingesetzt werden. Eine weitere Gruppe von vorzugsweise einzusetzenden Polyethern sind die Polytetramethylenglykole (Poly(oxytetramethylen)glycol, Poly-THF), die z.B. durch die saure Polymerisation von Tetrahydrofuran hergestellt werden, dabei liegt der Molekulargewichtsbereich der Polytetramethylenglykole zwischen 600 und 6000, vorzugsweise im Bereich von 800 bis 5000.
Weiterhin sind als Polyole die flüssigen, glasartig amorphen oder kristallinen Polyester geeignet, die durch Kondensation von Di- bzw. Tricarbonsäuren, wie z.B. Adipinsäure, Sebacinsäure, Glutarsäure, Azelainsäure, Korksäure, Undecandisäure Dodecandisäure, 3,3-Dimethylglutarsäure,Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-Dodecandiol, Dimerfettalkohol, Glycerin, Trimethylolpropan oder deren Mischungen hergestellt werden können.
Eine weitere Gruppe der erfindungsgemäß einzusetzenden Polyole sind die Polyester auf der Basis von ε-Caprolacton, auch "Polycaprolactone" genannt.
Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-polyole und Dimerdiole (Fa. Henkel) sowie Rizinusöl und dessen Derivate. Auch die Hydroxyfunktionellen Polybutadiene, wie sie z.B. unter dem Handelsnamen "Poly-bd" erhältlich sind, können für die erfindungsgemäßen Zusammensetzungen als Polyole eingesetzt werden.
Es können auch Diole niederen Molekulargewichts anteilig mit verwendet werden, konkrete Beispiele für die letzteren Diole sind Ethylenglycol, 1,2-Propandiol, 1,3-Propandiol, 2,2-Dimethyl-1,3-propandiol, 2-Methylpropandiol, 1,6-Hexandiol, 2,4,4-Trimethylhexandiol-1,6, 2,2,4- Trimethylhexandiol-1,6, 1,4-Cyclohexandimethanol, Diethylenglycol, Triethylenglycol, Tetraethylenglycol, Dipropylenglycol, Tripropylenglycol, Tetrapropylenglycol, Poly(oxytetramethylen)glycol mit einem Molekulargewicht bis zu 650, Alkoxylierungsprodukte des Bisphenols A, Alkoxylierungsprodukte des Bisphenols F, der isomeren Dihydroxyanthracene, der isomeren Dihydroxynaphthaline, des Brenzkatechins, des Resorcins, des Hydrochinons mit bis zu 8 Alkoxy-Einheiten pro aromatischer Hydroxygruppe oder Mischungen der vorgenannten Diole.

Als Polyisocyanate können insbesondere alle gängigen aliphatischen, cycloaliphatischen oder aromatischen Di- oder Polyisocyanate verwendet werden. Beispiele für geeignete aromatische Diisocyanate sind alle Isomeren des Toluylendüsocyanats (TDI) entweder in isomerenreiner Form oder als Mischung mehrerer Isomerer, Naphthalin-1,5-düsocyanat (NDI), Naphthalin-1,4-diisocyanat (NDI), Diphenylmethan-4,4'-diisocyanat (MDI), Diphenylmethan-2,4'-diisocyanat sowie Mischungen des 4,4'-Diphenylmethandüsocyanats mit dem 2,4'-Isomeren, Xylylen-diisocyanat (XDI), 4,4'-Diphenyl-dimethylmethandiisocyanat, Di- und Tetraalkyl-diphenylmethandiisocyanat, 4,4'-Dibenzyldüsocyanat, 1,3-Phenylendüsocyanat, 1,4-Phenylendiisocyanat. Beispiele für geeignete cycloaliphatische Diisocyanate sind die Hydrierungsprodukte der vorgenannten aromatischen Diisocyanate wie z.B. das 4,4`-Dicyclohexylmethandüsocyanat (H₁₂MDI), 1-Isocyanatomethyl-3-isocyanato-1,5,5-trimethyl-cyclohexan (Isophorondüsocyanat, IPDI), Cyclohexan-1,4-düsocyanat, hydriertes Xylylen-diisocyanat (H₆XDI), 1 -Methyl-2,4-diisocyanato-cyclohexan, m- oder p-Tetramethylxylendüsocyanat (m-TMXDI, p-TMXDI) und Dimerfettsäure-Diisocyanat. Beispiele für aliphatische Diisocyanate sind Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan, Lysindüsocyanat sowie 1,12-Dodecandiisocyanat (C₁₂DI).

Als Weichmacher eignen sich alle in der Polyurethanchemie für Kleb- / Dichtstoffe bekannten Weichmacher, dies sind insbesondere die Dialkylphthalate, Dialkyladipate, Dialkylsebacate oder Alkylarylphthalate wobei der Alkylrest in der Regel ein linearer oder verzweigter Rest mit vier bis zwölf Kohlenstoffatomen ist. Weiterhin eignen sich Alkylbenzoate, Dibenzoate von Polyolen wie Ethylenglycol, Propylenglycol oder den niederen Polyoxypropylen-Polyoxyethen-Verbindungen. Weitere geeignete Weichmacher sind Alkylphosphate, Arylphosphate oder Alkylarylphosphate sowie die Alkylsulfonsäureester des Phenols.

Neben den vorgenannten Rußen als verstärkenden Füllstoffen können noch weitere Füllstoffe mitverwendet werden, insbesondere sind hier zu nennen Kreiden, natürliche gemahlene oder gefällte Calciumcarbonate-, Silicate wie z. B. Aluminiumsilicate oder Magnesiumaluminiumsilicate oder auch Talkum.

Zur Herstellung von spezifisch leichten Kleb- / Dichtstoffe können auch Leichtfüllstoffe anteilig mitverwendet werden, beispielsweise Kunststoffmikrohohlkugeln, vorzugsweise in vorexpandierter Form.

Zusätzlich können noch Zusätze zur Regelung des Fließverhaltens zugesetzt werden, beispielhaft erwähnt seinen Hamstoffderivate, fibrillierte oder Pulpkurzfasern, pyrogene Kieselsäuren und dergleichen.

Als "Stabilisatoren" im Sinne dieser Erfindung sind einerseits Stabilisatoren zu verstehen, die eine Viskositätsstabilität des Polyurethanprepolymeren während der Herstellung, Lagerung bzw. Applikation bewirken. Hierfür sind z.B. monofunktionelle Carbonsäurechloride, monofunktionelle hochreaktive lsocyanate, aber auch nicht-korrosive anorganische Säuren geeignet, beispielhaft seien genannt Benzoylchlorid, Toluolsulfonylisocyanat, Phosphorsäure oder phosphorige Säure. Des weiteren sind als Stabilisatoren im Sinne dieser Erfindung Antioxidantien, UV-Stabilisatoren oder Hydrolyse-Stabilisatoren zu verstehen. Die Auswahl dieser Stabilisatoren richtet sich zum einen nach den Hauptkomponenten der Zusammensetzung und zum anderen nach den Applikationsbedingungen sowie den zu erwartenden Belastungen des ausgehärteten Produktes. Wenn das Polyurethanprepolymer überwiegend aus Polyetherbausteinen aufgebaut ist, können hauptsächlich Antioxidantien, ggf. in Kombination mit UV-Schutzmitteln, notwendig werden. Beispiele hierfür sind die handelsüblichen sterisch gehinderten Phenole und/oder Thioether und/oder substituierten Benzotriazole oder die sterisch gehinderten Amine vom Typ des HALS ("Hindered Amine Light Stabilizer").

Bestehen wesentliche Bestandteile des Polyurethanprepolymers aus Polyesterbausteinen, können Hydrolyse-Stabilisatoren, z.B. vom Carbodiimid-Typ, eingesetzt werden.

Die erfindungsgemäßen Zusammensetzungen können ggf. zusätzlich Katalysatoren enthalten, die die Bildung des Polyurethanprepolymeren bei seiner Herstellung beschleunigen und/oder die die Feuchtigkeitsvernetzung nach der Applikation des Kleb-/Dichtstoffes beschleunigen. Als erfindungsgemäß einsetzbare Katalysatoren eignen sich z.B. die metallorganische Verbindungen des Zinns, Eisens, Titans oder Wismuts wie Zinn(ll)salze von Carbonsäuren, z.B. Zinn-ll-acetat, -ethylhexoat und -diethylhexoat. Eine weitere Verbindungsklasse stellen die Dialkyl-Zinn(IV)-Carboxylate dar. Die Carbonsäuren haben 2, vorzugsweise wenigstens 10, insbesondere 14 bis 32 C-Atome. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie 2-Ethylhexan-, Capryl-, Caprin-, Laurin-, Myristin-, Palmitin- und Stearinsäure. Konkrete Verbindungen sind Dibutyl- und Dioctyl-zinndiacetat, - maleat, -bis-(2-ethylhexoat), -dilaurat, Tributylzinnacetat, Bis(β-methoxycarbonylethyl)zinndilaurat und Bis (β-acetyl-ethyl)zinnditaurat.

Auch Zinnoxide und -sulfide sowie -thiolate sind brauchbar. Konkrete Verbindungen sind: Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat, Bis(β-methoxycarbonyl-ethyl)zinndidodecylthiolat, Bis(β-acetyl-ethyl)zinn-bis(2-ethylhexylthiolat), Dibutyl- und Dioctylzinndidodecylthiolat, Butyl- und Octylzinn- tris(thioglykolsäure-2-ethylhexoat), Dibutyl- und Dioctylzinn-bis(thioglykolsäure-2-ethylhexoat), Tributyl- und Trioctylzinn(thioglykolsäure-2-ethylhexoat) sowie Butyl- und Octylzinntris(thioethylenglykol-2-ethylhexoat), Dibutyl- und Dioctylzinn- bis(thioethylenglykol-2-ethylhexoat), Tributyl- und Trioctylzinn(thioethylenglykol-2-ethylhexoat) mit der allgemeinen Formel Rₙ₊₁Sn(SCH₂CH₂OCOC₈H₁₇)_{3-n'} wobei R eine Alkylgruppe mit 4 bis 8 C-Atornen ist, Bis(β-methoxycarbonyl-ethyl)zinn-bis(thioethylenglykol-2-ethylhexoat), Bis(β-methoxycarbonyl-ethyl)-zinn-bis(thioglyko)säure-2-ethylhexoat), und Bis(β**-**acetyl-ethyl)zinn-bis(thioethylenglykol-2-ethylhexoat) und Bis(β-acetyl-ethyl)zinn-bis(thioglykolsäure-2-ethylhexoat.

Zusätzlich geeignet sind auch aliphatische tertiäre Amine insbesondere bei cyclischer Struktur. Unter den tertiären Aminen sind auch solche geeignet, die zusätzlich noch gegenüber den Isocyanaten reaktive Gruppen tragen, insbesondere Hydroxyl- und/oder Aminogruppen. Konkret genannt seien: Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanolhexylamin, Diethanolcyclohexylamin, Diethanolphenylamin sowie deren Ethoxylierungs- und Propoxylierungs-Produkte, Diaza-bicyclo-octan (DABCO), Triethylamin, Dimethylbenzylamin (Desmorapid DB, BAYER), Bisdimethylaminoethylether (Calalyst A 1, UCC), Tetramethylguanidin, Bisdimethylaminomethyl-phenol, 2-(2-Dimethylaminoethoxy)ethanol, 2-Dimethylaminoethyl-3-dimethylaminopropylether, Bis(2-dimethylaminoethyl)ether, N,N-Dimethylpiperazin, N-(2-hydroxyethoxyethyl)-2-azanorbomane, oder auch ungesättigte bicyclische Amine, z. B. Diazabicycloundecen (DBU) sowie Texacat DP-914 (Texaco Chemical), N,N,N,N-Tetramethylbutan-1,3-diamin, N,N,N,N-Tetramethylpropan-1,3-diamin und N,N,N,N-Tetramethylhexan-1,6-diamin. Die Katalysatoren können auch in oligomerisierter oder polymerisierter Form vorliegen, z.B. als N-methyliertes Polyethylenimin.
Ganz besonders bevorzugte Katalysatoren sind jedoch die Derivate des Morpholins. Konkrete Beispiele für geeignete Morpholino-Verbindungen sind Bis(2-(2,6-dimethyl-4-morpholino) ethyl)-(2-(4-morpholino) ethyl) amin, Bis(2-(2,6-dimethyl-4-morpholino) ethyl)-(2-(2,6-diethyl-4-morpholino) ethyl) amin, Tris(2-(4-morpholino) ethyl) amin, Tris(2-(4-morpholino) propyl) amin, Tris(2-(4-morpholino) butyl) amin, Tris(2-(2,6-dimethyl-4-morpholino) ethyl) amin, Tris(2-(2,6-diethyl-4-morpholino) ethyl) amin, Tris(2-(2-methyl-4-morpholino) ethyl) amin oder Tris(2-(2-ethyl-4-morpholino) ethyl) amin, Dimethylaminopropylmorpholin, Bis-(morpholinopropyl)-methylamin, Diethylaminopropylmorpholin, Bis-(morpholinopropyl)-ethylamin, Bis-(morpholinopropyl)-propylamin, Morpholinopropylpyrrolidon oder N-Morpholinopropyl-N'-methyl-piperazin, Dimorpholinodiethylether (DMDEE) oder Di-2,6-dimethylmorpholinoethyl)ether.
Die vorgenannten Morpholin-Derivate weisen eine besonders hohe katalytische Aktivität, insbesondere der Wasser- (Feuchtigkeits-) lsocyanat-Reaktion, auf. Deshalb sind bereits sehr niedrige Katalysatorkonzentrationen hocheffizient für Vernetzung bzw. Aushärtung der Klebstoffe, die Konzentrationen des Katalysators in der Klebstoff-Formulierung können zwischen 0,001 und 2 Gew.%, vorzugsweise zwischen 0,02 und 0,9 Gew. % liegen.

Für hochfeste und hochmodulige Klebstoffe wird in der Regel ein hoher Anteil an Ruß als verstärkender Füllstoff mitverwandt, der Anteil an Ruß liegt vorzugsweise oberhalb von 10 Gew. %, bezogen auf die gesamte Klebstoff-Zusammensetzung, typischerweise liegt er zwischen 15 und 25 Gew. % und kann bis zu 40 Gew. % betragen.
Anorganische Füllstoffe, wie Kreiden sind typischerweise in der Größenordnung zwischen 5 und 25 Gew. % in den Formulierungen vorhanden. Der Prepolymeranteil liegt bei einkomponentigen Zusammensetzungen in der Größenordung von 20 bis 50 Gew. % wobei aus Handhabungsgründen das Prepolymer häufig bis zu 20 Gew. % an Weichmachern enthalten kann.

Die erfindungsgemäße Additivlösung aus thermoplastischen Polymer und hochsiedendern Löser wird üblicherweise in einem Verhältnis Polymer zu Löser von 2:1 bis 1:50 hergestellt. Je nach gewünschtem elektrischem Widerstand werden der Klebstoff - Zusammensetzung 2 bis 25 Gew.% von vorgenannten Lösung zugesetzt, dies entspricht einem Gesamtanteil an thermoplastischem Polymer (unter Vernachlässigung des Löseranteils) von 1,5 Gew. % bis zu 7 Gew. %.

Durch diese Zusätze läßt sich der spezifische Gleichstromwiderstand von ca. 10⁵ Ω.cm auf 10⁹ bis 10¹⁰ Ω.cm verbessern, dieser Wert wird vielfach von der Autoindustrie für "antennentaugliche" Verklebungen spezifiziert. Bei Bedarf läßt sich dieser Wert auf 10¹² bis 10¹⁴Ω.cm durch höhere Mengen an gelöstem Thermoplasten erhöhen. Gleichzeitig verbessern sich die Wechselstromwerte, die Kapazitätswerte sind trotz hohem Rußanteil in der Formulierung in dem Bereich der Anforderungen an moderne Scheibenklebstoffe mit Antenneneignung. Es wurde weiterhin beobachtet, daß sich die elektrischen Eigenschaften eines erfindungsgemäßen Klebstoffes über die Lagerzeit sogar verbessern.

Weiterhin wird für die Antennentauglichkeit von Automobilherstellern vielfach gefordert, daß die Impedanz folgende Werte nicht überschreitet: bei Frequenzen unter 6 MHz ε' ≤ 25 und ε" ≤ 1,8 und bei 100 MHz ε' 10 ± 5 und ε" 1,5 ± 0,5. Diese Messungen erfolgen mit einem handelsüblichen RF-Impedanzanalysator.
Zur näheren Erläuterung der Erfindung sollen die nachfolgenden Beispiele dienen, sie haben nur exemplarischen Charakter und decken nicht die gesamte Breite der erfindungsgemäßen Kleb- / Dichtstoffzusammensetzungen ab. Aus den oben gemachten Angaben kann der Fachmann jedoch die gesamte Anwendungsbreite leicht herleiten.

### Beispiele

### Beispiel 1

Der Direktverglasungskleb- / Dichtstoff "Terostat 8599" (Fa. Henkel Teroson GmbH) hat einen Rußgehalt von etwa 18,5 Gew. % bei diesem Kleb- / Dichtstoff wird ein spezifischer elektrischer Widerstand von etwa 10⁵ Ω.cm gemessen.

### Beispiel 2 (erfindungsgemäß)

Ein Teil eines Phthalsäure-Fumarsäure-Diolpolyesters, Schmelzpunkt 100 °C, Säurezahl 15,5, OH-Zahl 20 mg KOH/g wurden in zwei Teilen Dipropylenglycoldibenzoat unter schwachem Rühren dispergiert und dann durch Erwärmung auf 120 °C gelöst. Die klare Lösung wurde auf Raumtemperatur abgekühlt. In einem Planentenmischer wurde der handelsübliche Direktverglasungsklebstoff Terostat 8599 (Fa. Henkel Teroson) vorgelegt und diesem unter Rühren im Vakuum 7,5 Gew. % der vorgenannten Polyesterharzlösung in Benzosäureester zugefügt. Von diesem Produkt wurde der Gleichstromwiderstand gemessen, der war auf 10¹⁰ Ω.cm angestiegen, d.h. um 5 Zehnerpotenzen gegenüber dem unmodifizierten Kleb- / Dichtstoff angestiegen. Vergleichsproben, bei denen dem Terostat 8599 7,5 Gew. % Weichmacher oder Prepolymer zugesetzt wurden, zeigten dagegen nur einen unwesentlichen Anstieg des elektrischen Widerstandes, wurde das vorgenannte Polyesterharz in fester Form dem Klebstoff zugefügt, stieg der elektrische Widerstand ebenfalls kaum an. Dies zeigt, daß nur die erfindungsgemäße Zugabe des Polyesterharzes in Lösung einen signifikanten Anstieg des Gleichstromwiderstandes um mehrere Zehnerpotenzen bewirkt.

### Beispiel 3

In analoger Weise wurden 6 Gew. % der Polyesterharz/Benzosäureesterlösung (Verhältnis 1:1) dem handelsüblichen Direktverglasungs- Kleb-/ Dichstoff Terostat 8597 (Fa. Henkel Teroson GmbH) zugesetzt. Auch in diesem Fall stieg der Gleichstromwiderstand auf 10¹⁰ Ω.cm im Vergleich zu einem Gleichstromwiderstand des unmodifizierten Kleb- / Dichtstoffes von 10⁵ Ω.cm an. Bei allen erfindungsgemäß modifizierten Kleb- /Dichtstoffen wurden neben sehr guten Gleichstromwiderständen auch sehr gute Wechselstromeigenschaften gemessen, so daß diese Klebstoffe zum Verkleben von Scheiben mit hochintegrierten Antennen oder auch für Anwendungen auf unedleren Metallen (wie z.B. Aluminium) geeignet sind.

Zusätze von 6 bis 9 Gew.% von Lösungen von Polystyrol, ABS-Harzen oder Phenolharzen in Weichmachern, Isoparaffinen oder Essigsäureethylester zum handelsüblichen Direktverglasungs- Kleb-/ Dichstoff Terostat 8598 (Fa. Henkel Teroson GmbH) führten ebenfalls zu einer Erhöhung des Gleichstromwiderstandes von ursprünglich 10⁵ Ω.cm auf 10⁹ bis > 10¹⁰ Ω.cm.

## Patentansprüche

1. Ein- oder zweikomponentiger reaktive Kleb- / Dichtstoff Zusammensetzung, enthaltend mehr als 10 Gew. % der Gesamtzusammensetzung an Ruß als verstärkenden Füllstoff, **dadurch gekennzeichnet, daß** die Kleb- / Dichtstoff- Zusammensetzung Lösungen von nicht funktionellen thermoplastischen Polymeren in hochsiedenden Lösern enthält.

2. Einkomponentige Kleb- / Dichtstoff-Zusammensetzung nach Anspruch 1 **dadurch gekennzeichnet, daß** das reaktive Bindemittel ein Prepolymer mit reaktiven Isocyanatgruppen oder reaktiven Silangruppen, ausgewählt aus der Gruppe der Alkoxysilane, Acetoxysilane, Silazane oder Oximatosilane, ist.

3. Zweikomponentige Kleb- / Dichtstoff - Zusammensetzungen nach Anspruch 1 **dadurch gekennzeichnet, daß** die erste Komponente ein Bindemittel nach Anspruch 2 enthält und die zweite Komponente eine Härterkomponente ist, die Polyhydroxylverbindungen oder Polyamine oder deren Mischungen enthält.

4. Ein- oder Zweikomponentige Kleb- /Dichtstoffe - Zusammensetzung nach mindestens einem der vorhergehenden Ansprüche, **dadurch gekennzeichnet, daß** das nichtfunktionelle Polymer ausgewählt wird aus der Gruppe der Vinylchloridhomo- und Copolymere, Ethylenvinylacetat, (Meth)acrylsäureester, ataktischen oder isotaktischen Poly-α-Olefinen, Polycarbonaten, Polyestern, Phenolharzen, Styrolhomo- oder Copolymere oder deren Mischungen.

5. Ein- oder zweikomponentige Kleb- / Dichtstoff-Zusammensetzung nach mindestens einem der vorhergehenden Ansprüche, **dadurch gekennzeichnet, daß** der hochsiedende Löser ausgewählt wird aus der Gruppe der Dialkylphthalate, Dialkyladipate, Dialkylsebacate, Alkyl-, Aryl- oder Alkylarylphosphate, Alkylsulphonsäurephenylester, Mineralöl oder deren Mischungen.

6. Zusammensetzung nach mindestens einem der vorhergehenden Ansprüche **dadurch gekennzeichnet, daß** sie 1 bis 10 Gew. % des gelösten thermoplastischen Polymeren enthält.

7. Verfahren zur Herstellung der ein - oder zweikomponentigen Kleb- / Dichtstoff- Zusammensetzung nach mindestens einem der vorhergehenden Ansprüche **gekennzeichnet durch** die folgenden wesentlichen Verfahrensschritte.
a) Dispergieren des pulverförmigen thermoplastischen Polymers in einem Löser, vorzugsweise einem hochsiedenden Lösungsmittel oder einem Weichmacher,
b) Lösen des Polymers, ggf. unter Rühren und Erwärmen auf Temperaturen bis 140 °C, bis zur Homogenität,
c) Abkühlen der Polymer-Lösung,
d) Dispergieren dieser Lösung in einer Kleb- / Dichtstoffmasse enthaltend mindestens ein reaktives Prepolymer, Ruß, ggf. weitere Füllstoffe, Weichmacher sowie ggf. Katalysator(en) und weitere Hilfs- und Zusatzstoffe.

8. Verfahren nach Anspruch 7, **dadurch gekennzeichnet, daß** im Schritt a) und b) das Verhältnis von Polymer zu Löser 2:1 bis 1:50 beträgt.

9. Verfahren nach Anspruch 7 oder 8 **dadurch gekennzeichnet, daß** Schritt d) in einer trockenen Atmosphäre, ggf. unter Schutzgas oder im Vakuum, erfolgt.

10. Verwendung Zusammensetzung nach mindestens einem der Ansprüche 1 bis 6 zur Herstellung niedrig leitfähiger Klebe-/Dichtverbindungen, insbesondere zum Verkleben von Glasscheiben im Fahrzeugbau und deren Reparatur.

## Claims

1. One- or two-component reactive adhesive/sealant composition comprising more than 10 wt.% of the total composition of carbon black as a reinforcing filler, **characterized in that** the adhesive/sealant composition comprises solutions of non-functional thermoplastic polymers in high-boiling dissolving agents.

2. One-component adhesive/sealant composition according to claim 1, **characterized in that** the reactive binder is a prepolymer with reactive isocyanate groups or reactive silane groups selected from the group consisting of alkoxysilanes, acetoxysilanes, silazanes and oximatosilanes.

3. Two-component adhesive/sealant compositions according to claim 1, **characterized in that** the first component comprises a binder according to claim 2 and the second component is a hardener component which comprises polyhydroxy compounds or polyamines or mixtures thereof.

4. One- or two-component adhesive/sealant composition according to at least one of the preceding claims, **characterized in that** the non-functional polymer is selected from the group consisting of vinyl chloride homo- and copolymers, ethylene-vinyl acetate, (meth)acrylic acid esters, atactic or isotactic poly-α-olefins, polycarbonates, polyesters, phenolic resins, styrene homo- or copolymers and mixtures thereof.

5. One- or two-component adhesive/sealant composition according to at least one of the preceding claims, **characterized in that** the high-boiling dissolving agent is selected from the group consisting of dialkyl phthalates, dialkyl adipates, dialkyl sebacates, alkyl, aryl or alkyl aryl phosphates, alkylsulfonic acid phenyl esters, mineral oil and mixtures thereof.

6. Composition according to at least one of the preceding claims, **characterized in that** it comprises 1 to 10 wt.% of the dissolved thermoplastic polymer.

7. Process for the preparation of the one- or two-component adhesive/sealant composition according to at least one of the preceding claims, **characterized by** the following essential process steps:
a) dispersing of the pulverulent thermoplastic polymer in a dissolving agent, preferably a high-boiling solvent or a plasticizer,
b) dissolving of the polymer, optionally with stirring and heating to temperatures of up to 140°C, until homogeneity is achieved,
c) cooling of the polymer solution,
d) dispersing of this solution in an adhesive/sealant composition comprising at least one reactive prepolymer, carbon black, optionally further fillers, plasticizers and optionally catalyst(s) and further auxiliary substances and additives.

8. Process according to claim 7, **characterized in that** in steps a) and b) the ratio of polymer to dissolving agent is 2:1 to 1:50.

9. Process according to claim 7 or 8, **characterized in that** step d) is carried out in a dry atmosphere, optionally under an inert gas or in vacuo.

10. Use of a composition according to at least one of claims 1 to 6 for the production of adhesive/sealing bonds of low conductivity, in particular for gluing glass windscreens in vehicle construction and repair thereof.

## Revendications

1. Composition réactive adhésive/d'étanchéité à un ou deux composants, contenant plus de 10 % en poids, par rapport au poids total de la composition, de noir de fumée comme charge renforçatrice, **caractérisée en ce que** la composition adhésive/d'étanchéité contient des solutions de polymères thermoplastiques non fonctionnels dans des solvants à point d'ébullition élevé.

2. Composition adhésive/d'étanchéité à un composant selon la revendication 1, **caractérisée en ce que** le liant réactif est un prépolymère comprenant des groupes isocyanate réactifs ou des groupes silane réactifs, choisis dans le groupe formé par les alcoxysilanes, les acétoxysilanes, les silazanes ou les oxymatosilanes.

3. Composition adhésive/d'étanchéité à deux composants selon la revendication 1, **caractérisée en ce que** le premier composant contient un liant selon la revendication 2 et le deuxième composant est un composant durcisseur qui contient des composés polyhydroxylés ou des polyamines ou des mélanges de ces composés.

4. Composition adhésive/d'étanchéité à un ou deux composants selon au moins l'une des revendications précédentes, **caractérisée en ce que** les polymères non fonctionnels sont choisis dans le groupe formé par les homo- et copolymères du chlorure de vinyle, l'acétate d'éthylvinyle, les esters d'acides (méth)acryliques, les poly-α-oléfines atactiques ou isotactiques, les polycarbonates, les polyesters, les résines phénoliques, les homo- et copolymères du styrène ou les mélanges de ces composés.

5. Composition adhésive/d'étanchéité à un ou deux composants selon au moins l'une des revendications précédentes, **caractérisée en ce que** le solvant à point d'ébullition élevé est choisi dans le groupe formé par les phtalates de dialkyle, les adipates de dialkyle, les sébaçates de dialkyle, les phosphates d'alkyle, d'aryle ou d'alkylaryle, les esters phényliques d'acides alkylsulfoniques, les huiles minérales ou les mélanges de ces composés.

6. Composition selon au moins l'une des revendications précédentes, **caractérisée en ce qu'**elle contient 1 à 10 % en poids du polymère thermoplastique dissous.

7. Procédé de préparation d'une composition adhésive/d'étanchéité à un ou deux composants selon au moins l'une des revendications précédentes, **caractérisée par** les étapes principales suivantes, consistant
a) à disperser le polymère thermoplastique pulvérulent dans un solvant, de préférence un solvant à point d'ébullition élevé ou un plastifiant,
b) à dissoudre le polymère, éventuellement sous agitation et chauffage, à une température pouvant aller jusqu'à 140°C, jusqu'à homogénéité,
c) à refroidir la solution du polymère,
d) à disperser cette solution dans une masse adhésive/d'étanchéité contenant au moins un prépolymère réactif, du noir de fumée, le cas échéant d'autres charges et plastifiants ainsi que le cas échéant un ou des catalyseurs, et d'autres adjuvants et additifs.

8. Procédé selon la revendication 7, **caractérisé en ce que** dans les étapes a) et b), le rapport du polymère au solvant est compris entre 2:1 et 1:50.

9. Procédé selon la revendication 7 ou 8, **caractérisé en ce que** l'étape d) se déroule sous atmosphère sèche, éventuellement sous gaz protecteur ou sous vide.

10. Utilisation de la composition selon au moins l'une des revendications 1 à 6 pour la préparation de composés adhésives/d'étanchéité de faible conductivité, en particulier pour le collage de vitres dans la production d'automobiles et la réparation de ces vitres.
